Europäisches Patentamt

European Patent Office

Office européen des brevets

(19)

(11) **EP 0 681 181 B1**

(12) **FASCICULE DE BREVET EUROPEEN**

(45) Date de publication et mention
de la délivrance du brevet:
**24.07.2002 Bulletin 2002/30**

(51) Int Cl.⁷: **G01N 27/72**, G01N 27/82

(21) Numéro de dépôt: **95106070.6**

(22) Date de dépôt: **24.04.1995**

(54) **Procédé et dispositif de contrôle électromagnétique de pneumatique usagés**

Verfahren und Vorrichtung zum elektromagnetischen Testen von gebrauchten Reifen

Method and device for the electromagnetic testing of used tyres

(84) Etats contractants désignés:
**AT DE DK ES FR GB IT SE**

(30) Priorité: **04.05.1994 FR 9405571**

(43) Date de publication de la demande:
**08.11.1995 Bulletin 1995/45**

(73) Titulaire: **PNEU LAURENT**
**89200 Avallon (FR)**

(72) Inventeurs:
• **Baccaud, Armand**
**F-21460 Epoisses (FR)**
• **Baudrit, Damien**
**F-89200 Avallon (FR)**

(74) Mandataire: **Hiebel, Robert**
**Michelin & Cie,**
**Service SGD/LG/PI Ladoux**
**63040 Clermont-Ferrand Cedex 01 (FR)**

(56) Documents cités:
**EP-A- 0 348 624**      EP-A- 0 580 024
**DE-A- 3 418 066**      US-A- 3 675 375

EP 0 681 181 B1

Printed by Jouve, 75001 PARIS (FR)

## Description

L'invention concerne les méthodes de contrôle de l'état des pneumatiques usagés, par exemple avant leur rechapage. Plus particulièrement, elle se rapporte à une méthode de contrôle non destructif de l'état des éléments de renfort métalliques de ces pneumatiques, et notamment des nappes du sommet.

Lorsque la bande de roulement d'un pneumatique est usée, il est courant de le "rechaper", c'est-à-dire de remplacer la bande de roulement usée par une neuve. Mais cette opération n'est possible que si l'état mécanique du pneumatique est satisfaisant. C'est pourquoi, on vérifie soigneusement, avant et pendant le rechapage, quels sont les défauts que présentent les pneumatiques. En fonction de la gravité de ces défauts, ils sont soit réparés soit rejetés.

Les éléments de renfort métalliques, qui sont incorporés profondément dans le pneumatique, peuvent, en particulier, présenter des défauts tels des ruptures ou des oxydations. Ces défauts ne sont pas toujours décelés par un contrôle manuel et visuel classiquement effectué par un opérateur.

Pour résoudre ce problème, des méthodes de contrôle non destructif basées, par exemple, sur des rayons X ont été proposées. Ces méthodes nécessitent une analyse visuelle relativement longue des résultats, ce qui ne permet pas leur automatisation complète, elles demandent en plus des investissements importants. En conséquence, ces méthodes de visualisation ne sont que très peu utilisées en rechapage.

Le document EP 0 580 024 présente un procédé de contrôle de défauts dans des produits semis-finis tels des nappes de renfort métalliques calandrées utilisées pour la confection de pneumatiques. Ce procédé utilise des sondes à effet Hall et détecte la variation de champ électromagnétique des renforts liée aux défauts.

Le document US 3 675 375 utilise un capteur de distance sans contact basé sur les phénomènes de courants de Foucaud induits dans un conducteur métallique pour mesurer l'épaisseur de la bande de roulement de pneumatiques lors de leur cardage.

L'invention a pour objet un procédé de contrôle non destructif de l'état d'un élément de renfort métallique de pneumatiques usagés, aisément automatisable et d'un coût réduit par rapport aux méthodes de visualisation précédentes.

Dans ce qui suit, on entend par "élément de renfort métallique" d'un pneumatique les nappes de renfort métalliques du sommet, ou tout ou partie de la nappe carcasse si elle est métallique, ou les tringles, ou tout autre élément de renfort métallique susceptible d'être utilisé dans un pneumatique. Pour pouvoir être contrôlé, cet élément de renfort métallique doit être réalisé en matériau magnétique.

Le procédé de contrôle non destructif de l'état d'un élément de renfort métallique en matériau magnétique dans un pneumatique est tel que

- on soumet ledit élément de renfort métallique à un champ magnétique pour aimanter ledit élément ;
- on crée un mouvement relatif entre ledit élément de renfort métallique dudit pneumatique et au moins un conducteur d'un dispositif de détection placé en regard dudit élément de renfort métallique de telle sorte que toute variation d'aimantation dudit élément induit dans ledit conducteur une force électromotrice ;
- on détecte et on enregistre ladite force électromotrice pour l'ensemble dudit élément métallique de renfort;
- on détermine au moins une grandeur caractéristique de l'ensemble des valeurs enregistrées de ladite force électromotrice :
- on compare ladite grandeur caractéristique avec au moins une grandeur de référence pour déterminer l'état dudit élément de renfort métallique dudit pneumatique usagé.

Le mouvement relatif entre l'élément de renfort métallique du pneumatique et le conducteur peut être créé par la mise en rotation du pneumatique autour de son axe.

Il est aussi avantageux que la vitesse de rotation relative entre l'élément de renfort métallique et le conducteur soit connue avec précision et de préférence constante.

Le procédé de contrôle selon l'invention utilise ainsi le fait que toute variation d'aimantation de l'élément de renfort métallique, due notamment à des ruptures ou des oxydations de câbles, induit une force électromotrice dans le conducteur du dispositif de détection.

La grandeur caractéristique peut avantageusement être la valeur quadratique moyenne des forces électromotrices induites.

On effectue, pour caractériser l'état de l'élément de renfort métallique, une moyenne sur l'ensemble du pneumatique. Ce sont donc des caractéristiques globales qui sont utilisées en référence à au moins une grandeur préalablement déterminée.

Selon un mode d'exploitation particulier, l'état de l'élément de renfort métallique est classé "mauvais" quand la valeur quadratique moyenne $P$ des forces électromotrices induites est supérieure à un seuil $S_H$.

Pour déterminer la valeur du seuil $S_H$ :

- on utilise un lot homogène de pneumatiques usagés ;
- pour chaque pneumatique, on effectue le test de contrôle précédent et on calcule le paramètre $P$
- on met à nu l'élément de renfort métallique de tous les pneumatiques et on détermine ceux qui sont "acceptables" et ceux qui sont "mauvais" ;
- on choisit le seuil $S_H$ tel que tous les pneumatiques ayant une valeur de $P$ supérieure à $S_H$ sont classés "mauvais".

Le procédé de contrôle selon l'invention permet ainsi de détecter, dès avant les opérations de rechapage, les pneumatiques usagés dont l'état de l'élément de renfort métallique est mauvais et qui ainsi ne peuvent pas être rechapés. Cela entraîne un gain de productivité notable.

Selon un mode d'exploitation complémentaire, on peut utiliser, comme seconde grandeur caractéristique, une grandeur $N_b$ fonction de la dispersion des forces électromotrices induites.

Ainsi, après avoir échantillonné N valeurs des forces électromotrices induites pendant une rotation relative du pneumatique par rapport au conducteur d'au moins un tour à vitesse de rotation constante, on élève les N valeurs obtenues au carré, on classe lesdites valeurs par valeurs décroissantes et on calcule :

-

$$P = \frac{1}{N}\sum_{j=1}^{N} e_j^2,$$

valeur quadratique moyenne des forces électromotrices induites,
- $N_b$ tel que

$$\sum_{j=1}^{N_b} e_j^2 = a\sum_{j=1}^{N} e_j^2,$$

où $e_j$ est la jème valeur des forces électromotrices induites échantillonnées, classées par valeurs décroissantes et "*a*" est un nombre compris entre 0 et 1 et, de préférence, égal à 0,9.

L'état des nappes métalliques est classé "acceptable" quand la valeur quadratique moyenne P des forces électromotrices induites est inférieure à un seuil $S_B$ et ledit état est classé "mauvais" lorsque ladite valeur quadratique moyenne P est supérieure à un seuil $S_H$. Lorsque la valeur quadratique moyenne P est comprise entre les deux seuils précédents, l'état des nappes sommet métalliques est classé "mauvais" si la valeur $N_b$ caractéristique de la dispersion des valeurs quadratiques des forces électromotrices induites est supérieure à un seuil $N_c$.

Enfin, pour déterminer la valeur des seuils $S_B$, $S_H$ et $N_c$ :

- on utilise un lot homogène de pneumatiques usagés ;
- pour chaque pneumatique, on effectue le test de contrôle précédent et on calcule les paramètres P et $N_b$ ;
- on met à nu l'élément de renfort métallique de tous les pneumatiques et on détermine ceux qui sont "acceptables" et ceux qui sont "mauvais" ;
- on choisit le seuil $S_H$ tel que tous les pneumatiques ayant une valeur de P supérieure à $S_H$ sont classés "mauvais" ;
- on choisit le seuil $S_B$ tel que tous les pneumatiques ayant une valeur de P inférieure à $S_B$ sont classés "acceptables" ;
- on choisit le seuil $N_c$ tel que, pour tous, ou pratiquement tous, les pneumatiques ayant une valeur de P comprise entre les seuils $S_B$ et $S_H$, et classés "mauvais", on ait $N_b > N_c$.

Ce second mode d'exploitation a l'avantage d'identifier parmi les pneumatiques classés "acceptables" par le précédent mode d'exploitation, ceux dont les défauts sont largement répartis sur l'ensemble des éléments de renfort métalliques et ainsi ne sont pas réparables.

L'invention a aussi pour objet un dispositif destiné à mettre en oeuvre le procédé précédent. Ce dispositif comprend :

- des moyens pour soumettre un élément de renfort métallique du pneumatique à un champ magnétique et l'aimanter ;
- un dispositif de détection des variations d'aimantation dudit élément de renfort métallique comportant au moins un conducteur pour détecter des variations d'aimantation dudit élément de renfort métallique ;
- des moyens pour créer un mouvement relatif entre ledit élément de renfort métallique et ledit dispositif de détection;
- des moyens d'enregistrement desdites variations détectées par ledit conducteur ; et
- des moyens pour déterminer au moins une grandeur caractéristique de l'ensemble des variations enregistrées.

Avantageusement le mouvement relatif créé entre l'élément de renfort métallique et le dispositif de détection est un mouvement de rotation d'axe confondu avec l'axe de révolution dudit pneumatique et la vitesse de ce déplacement relatif est connue avec précision et, de préférence, constante.

Selon un mode de réalisation particulier, les moyens d'aimantation ont une position fixe par rapport au dispositif de détection et comportent au moins une première bobine d'aimantation parcourue par un courant électrique continu et au moins une première masse polaire d'adaptation, l'ensemble étant placé à proximité de la surface radialement extérieure du pneumatique de telle sorte qu'il y a un entrefer sensiblement constant entre tout point d'un profil transversal dudit élément de renfort métallique adjacent audit dispositif d'aimantation et ladite première masse polaire d'adaptation.

Avantageusement, le dispositif de détection comprend au moins une seconde bobine de détection comme conducteur et au moins une seconde masse polaire d'adaptation telles que les variations d'aimantation de l'élément de renfort métallique induisent dans la seconde bobine de détection des forces électromotrices, l'ensemble du dispositif de détection étant décalé circulairement d'un angle α par rapport au dispositif d'aimantation relativement à l'axe de révolution du pneumatique.

Selon un autre aspect du dispositif selon l'invention, la masse polaire d'adaptation du dispositif de détection a une forme de C, les deux extrémités des branches du C ayant une géométrie adaptée au profil transversal de l'élément de renfort métallique et étant disposées parallèlement entre elles à proximité de la surface radialement extérieure du pneumatique de telle sorte que l'entrefer est sensiblement constant entre tout point des profils transversaux dudit élément de renfort métallique adjacents auxdites extrémités des branches du C, et lesdites extrémités.

Enfin, selon un mode de réalisation préférentiel, le dispositif de détection comprend une seule bobine de détection.

Un exemple de mise en oeuvre de l'invention est maintenant décrit dans le cas particulier du contrôle de l'état des nappes métalliques du sommet de pneumatiques usagés à rechaper. Ces nappes métalliques sont réalisées en matériau magnétique. Cet exemple est présenté à l'aide des dessins annexés suivants :

- la figure 1 présente un schéma général d'un dispositif de contrôle de pneumatiques usagés selon l'invention ;
- la figure 2 est une vue en coupe AA du dispositif, tel qu'indiqué à la figure 1 ;
- la figure 3 représente le dispositif d'aimantation ;
- la figure 4 est une vue du dispositif de détection ;
- la figure 5 indique les étapes classiquement suivies lors du rechapage de pneumatiques usagés ;
- la figure 6, similaire à la précédente, inclut le contrôle selon l'invention.

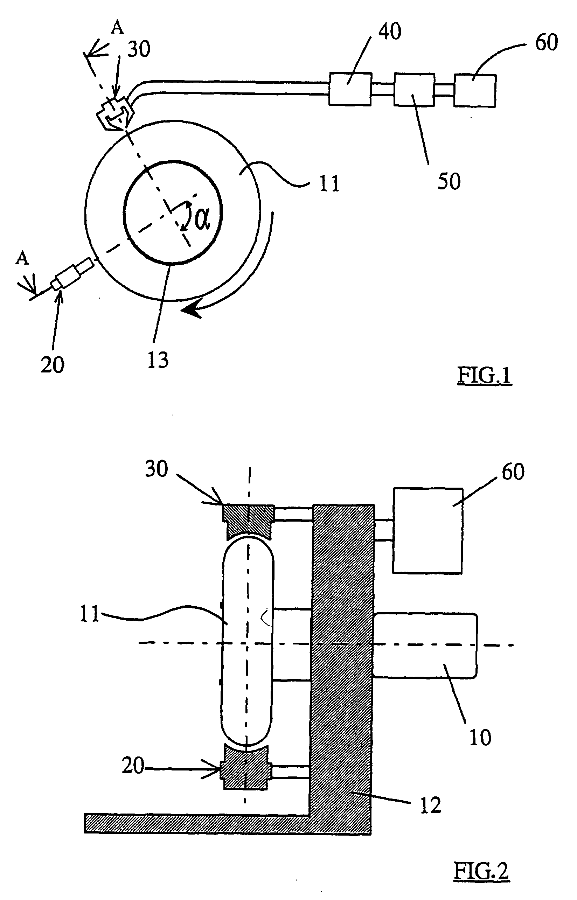

Les figures 1 et 2 présentent un schéma général d'un dispositif de contrôle non destructif de l'état des nappes sommet d'un pneumatique usagé à rechaper selon l'invention.

Ce dispositif comprend des moyens de maintien et de mise en rotation du pneumatique 11 avec un bâti 12, un mandrin expansible 13 sur lequel on vient mettre en place le pneumatique 11 avant de le gonfler et des moteurs 10, un dispositif 20 d'aimantation des éléments de renfort métalliques, un dispositif 30 de détection des variations d'aimantation des nappes métalliques et enfin des moyens d'acquisition numérique 40, de calcul 50 et d'affichage 60 connus.

Les dispositifs d'aimantation 20 et de détection 30 sont décalés circulairement d'un angle α relativement à l'axe de rotation du pneumatique 11. Cet angle est de l'ordre de 90° dans l'exemple décrit.

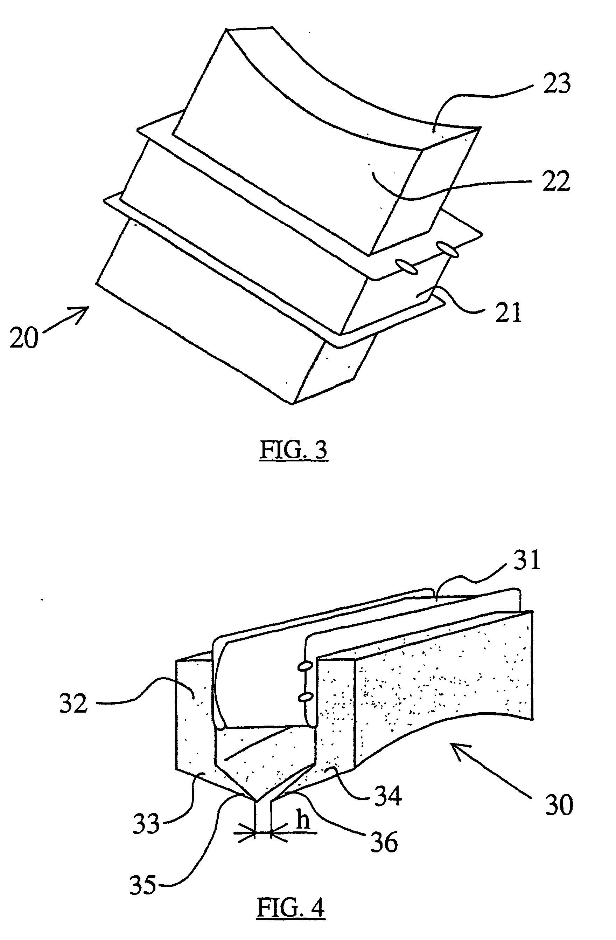

La figure 3 présente le dispositif d'aimantation 20. Ce dispositif comprend, dans un mode de réalisation préférentiel, une seule bobine 21 entourant une masse polaire d'adaptation 22 en acier doux. La bobine 21 comporte, par exemple, de 1 000 à 1 500 spires et est parcourue par un courant électrique continu I d'intensité de 1,2 à 1,5 A. La masse polaire d'adaptation 22 a une surface extérieure 23 qui est généralement adaptée au profil des nappes métalliques du sommet du pneumatiques 11. Le dispositif d'aimantation 20 (voir figure 2) est placé en regard de la surface radialement extérieure du sommet du pneumatique 11 de telle sorte qu'il y a un entrefer relativement constant entre le profil transversal des nappes métalliques adjacent au dispositif et la surface 23 de la masse polaire d'adaptation 22. La valeur de cet entrefer est telle qu'un pneumatique ayant une épaisseur de sculptures proche d'un pneumatique neuf peut être testé. Pour des pneumatiques tourisme, l'entrefer peut être de l'ordre de 12 mm. Cet entrefer reste sensiblement constant pendant la rotation du pneumatique 11.

Il n'est pas nécessaire d'avoir une géométrie particulière de la surface 23 pour chaque type de pneumatiques.

On peut aussi remplacer la bobine 21 du dispositif d'aimantation 20 par un aimant permanent.

Le dispositif de détection 30 est montré à la figure 4. Ce dispositif comprend, dans un mode de réalisation préférentiel, une seule bobine de détection 31 et une masse polaire d'adaptation 32. Cette masse polaire d'adaptation 32 a une forme générale en C. La bobine 31 entoure la partie centrale du C. Les deux branches 33 et 34 du C sont incurvées l'une vers l'autre. Leurs extrémités 35, 36 sont séparées par une distance h constante. D'autre part, transversalement, ces extrémités 35 et 36 ont une géométrie adaptée au profil transversal des éléments de renfort métalliques du pneumatique 11 à tester. Le dispositif de détection 30 (voir figure 2) est placé en regard de la surface radialement extérieure du sommet du pneumatique 11 de telle sorte qu'il y a un entrefer sensiblement constant entre les profils transversaux des nappes métalliques adjacents au dispositif 30 et les extrémités 35 et 36 de la masse polaire d'adaptation 32. La valeur de cet entrefer est aussi de l'ordre de 12 mm pour des pneumatiques tourisme. Il est important pour la fiabilité des résultats obtenus que la valeur de cet entrefer soit constante. En conséquence, il est souhaitable de disposer de jeux de masses polaires d'adaptation 32 pour tous les types de pneumatiques testés.

Le dispositif de détection 30 doit être sensible à de très faibles variations d'aimantation des éléments de renfort métalliques afin d'avoir une excellente sélectivité longitudinale. En conséquence, on choisit de préférence comme conducteur 31 où sont induits les forces électromotrices une bobine de détection 31 avec un grand nombre de spires, par exemple de 20 000 à 40 000 et la distance h séparant les deux extrémités 35 et 36 de la masse polaire d'adaptation 32 doit être aussi faible que possible. Un bon compromis correspond à une valeur h de l'ordre de 3 mm.

La vitesse de rotation du pneumatique relativement aux dispositifs d'aimantation et de détection est de préférence constante pendant l'acquisition des valeurs de forces électromotrices parce que la valeur des forces électromotrices induites est proportionnelle à la vitesse de déplacement relatif. Un dispositif d'entraînement à vitesse variable est aussi utilisable à condition de connaître précisément les vitesses relatives et d'en tenir compte dans l'évaluation des forces électromotrices enregistrées.

Selon un premier mode d'exploitation, le procédé de contrôle de l'état des éléments de renfort métalliques d'un pneumatique 11 selon l'invention comporte les étapes suivantes :

- on monte le pneumatique 11 à tester sur le mandrin 13, on le gonfle et on l'entraîne en rotation à vitesse constante, par exemple de l'ordre de 120 tr/mn ;
- la bobine d'aimantation 21 étant traversée par un courant I continu, le champ magnétique qu'elle produit aimante les éléments de renfort métalliques ;
- les variations d'aimantation des nappes métalliques créent dans la bobine de détection 31, par l'intermédiaire de la pièce polaire d'adaptation 32 des forces électromotrices induites e que l'on enregistre au moyen du dispositif d'acquisition numérique 40 ; cette acquisition se fait pendant un nombre entier de tours de rotation du pneumatique 11 ; une acquisition pendant un seul tour est tout à fait satisfaisante ;
- les valeurs $e_j$ sont alors élevées au carré et on calcule la grandeur P, valeur quadratique moyenne des forces électromotrices ;
- on détermine l'état des nappes métalliques par comparaison de la valeur de P avec un seuil de référence $S_H$: tout pneumatique testé pour lequel P est supérieur à $S_H$ est classé "mauvais", les autres pneumatiques sont classés "acceptables" ;
- les moyens de calcul 50 transmettent aux moyens d'affichage 60 le résultat du classement : pneu "acceptable", ou pneu "mauvais".

La détermination du seuil de référence $S_H$ est réalisée ainsi :

- on utilise un lot homogène (mêmes dimension, marque, type) de pneumatiques à rechaper, par exemple 70 à 100 pneumatiques usagés ;
- pour chaque pneumatique, on effectue le test de contrôle selon l'invention et on calcule le paramètre :

$$P = \frac{1}{N} \sum_{j=1}^{N} e_j^2,$$

valeur quadratique moyenne des forces électromotrices induites ;

- tous les pneumatiques sont alors déchapés, c'est-à-dire que les nappes métalliques de leurs sommets sont mises à nu au moyen par exemple d'un couteau de déchapage, on peut alors déterminer de façon précise l'état de leurs nappes métalliques de sommet et ainsi connaître ceux qui sont "acceptables", c'est-à-dire ceux dont les nappes métalliques n'ont pas de défauts ou dont les défauts sont réparables, ainsi que ceux qui sont à classer "mauvais" ;
- on choisit le seuil $S_H$ tel que tous les pneumatiques ayant une valeur de P supérieure à $S_H$ sont classés "mauvais".

Selon un mode d'exploitation complémentaire, on peut utiliser, comme seconde grandeur caractéristique, une grandeur $N_b$ fonction de la dispersion des forces électromotrices induites.

Ainsi, après avoir échantillonné les forces électromotrices induites pendant une rotation du pneumatique d'au moins un tour à vitesse de rotation constante, on élève les N valeurs obtenues au carré, on classe lesdites valeurs par valeurs décroissantes et on calcule en plus de P :

- $N_b$ tel que

$$\sum_{j=1}^{N_b} e_j^2 = a \sum_{j=1}^{N} e_j^2,$$

où $e_j$ est la jème valeur des forces électromotrices induites échantillonnées, classées par valeurs décroissantes et "$a$" est un nombre compris entre 0 et 1 et, de préférence, égal à 0,9.

$N_b$ est une caractérisation de la dispersion des valeurs des forces électromotrices induites. Plus sa valeur est faible, à valeur de P donnée, plus la dispersion des mesures est grande, ce qui correspond à des défauts plus ponctuels des éléments de renfort métalliques dans la direction longitudinale du pneumatique.

L'état des nappes métalliques peut alors être classé "acceptable" quand la valeur quadratique moyenne P des forces électromotrices induites est inférieure à un seuil $S_B$ et être classé "mauvais" lorsque P est supérieur à un seuil $S_H$. Lorsque P est compris entre les deux seuils précédents, l'état des nappes sommet métalliques est classé "mauvais" si la valeur $N_b$ caractéristique de la dispersion des valeurs quadratiques des forces électromotrices induites est supérieure à un seuil $N_c$.

Pour déterminer la valeur des seuils $S_B$, $S_H$ et $N_C$ :

- on utilise, comme précédemment, un lot homogène de pneumatiques usagés à rechaper ;
- pour chaque pneumatique, on effectue le test de contrôle selon l'invention et on calcule les paramètres P et $N_b$ ;
- on déchape tous les pneumatiques et on détermine ceux qui sont "acceptables" et ceux qui sont "mauvais" ;
- on choisit le seuil $S_H$ tel que tous les pneumatiques ayant une valeur de P supérieure à $S_H$ sont classés "mauvais" ;
- on choisit le seuil $S_B$ tel que tous les pneumatiques ayant une valeur de P inférieure à $S_B$ sont classés "acceptables" ;
- entre les deux seuils, la déposante a constaté que, compte tenu des consignes très strictes concernant les réparations admissibles, on pouvait discerner les pneumatiques "acceptables" des pneumatiques "mauvais" en fonction de l'aspect ponctuel ou diffus des défauts. En effet, pour la même valeur de P, une répartition ponctuelle des défauts correspond à des défauts aisément repérables et réparables, le pneumatique peut donc être classé "acceptable" parce qu'il est réparable ; en revanche, une répartition diffuse des défauts correspond à de nombreux petits défauts difficiles à repérer et en tout cas non réparables, économiquement parlant, tout en pouvant constituer un risque grave pour la fiabilité ultérieure du pneumatique rechapé, par exemple dans le cas d'une oxydation large des éléments de renfort métalliques. En conséquence, on peut choisir un seuil $N_c$ tel que pour tous, ou pratiquement tous, les pneumatiques classés "acceptables", on ait :

$$N_b \leq N_c$$

et tel que pour tous , ou pratiquement tous, les pneumatiques classés "mauvais", on ait

$$N_b > N_c.$$

Ce second mode d'exploitation a l'avantage d'identifier parmi les pneumatiques dont la valeur de P est comprise entre les deux seuils $S_H$ et $S_B$ ceux dont les défauts sont largement répartis sur l'ensemble des éléments de renfort métalliques et ainsi ne sont pas réparables, ou, en tout cas, difficilement réparables, économiquement parlant.

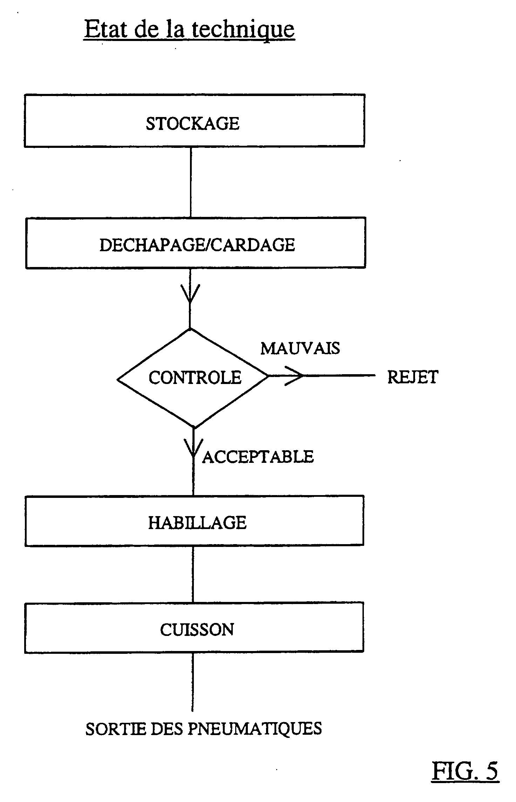

La procédure traditionnelle lors du rechapage de pneumatiques est présentée à la figure 5 :

- les pneumatiques usagés sont stockés à leur arrivée ;
- on retire par une opération d'usinage le reliquat de la bande de roulement usée : le "cardage" ;
- toutes les parties du pneumatique sont alors contrôlées ; notamment, en ce qui concerne le sommet, à chaque fois que la surface cardée dudit sommet apparaît "anormale", on met à nu à cet endroit avec une petite brosse dure les nappes métalliques pour déterminer si elles présentent un défaut et si ce défaut éventuel est réparable ; si les réparations ne sont pas admissibles, le pneumatique est classé "mauvais" et est rejeté ; c'est au cours de cette opération de brossage que s'effectue la principale opération de contrôle de l'état des éléments de renfort métalliques ;
- on met en place une nouvelle bande de roulement : "l'habillage" ;
- on vulcanise la liaison entre la nouvelle bande de roulement et le sommet du pneumatique ainsi que la nouvelle bande, si nécessaire.

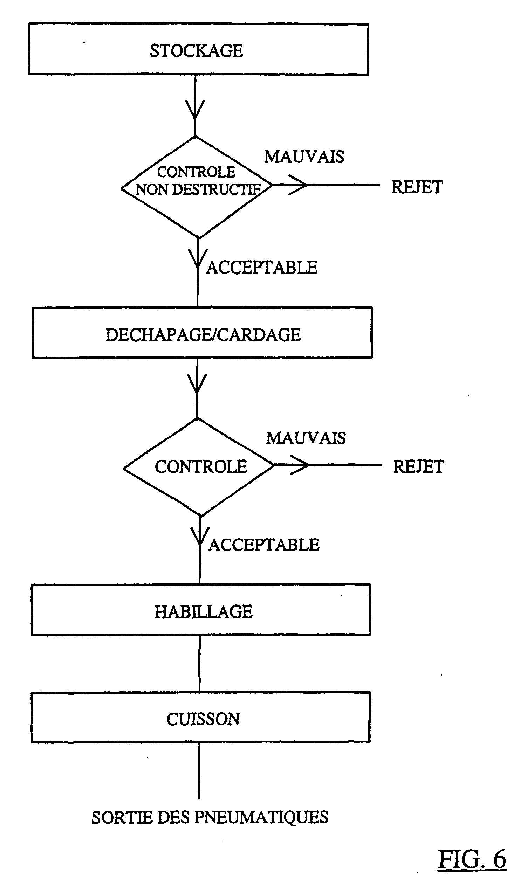

Par rapport à l'état de la technique, comme il est indiqué à la figure 6, l'opération de contrôle non destructif est prévue avant l'opération de cardage. En conséquence, il n'est pas nécessaire de pratiquer l'opération de cardage sur les pneus classés "mauvais" par ce contrôle non destructif, ce qui entraîne un gain de productivité.

Un autre avantage notable de l'invention est que ce procédé permet d'identifier de façon sûre des pneumatiques très dangereux à cause de poches d'oxydation diffuses très difficiles à repérer lors du brossage. C'est donc un gain d'assurance qualité.

Le dispositif de contrôle selon l'invention a un coût sensiblement plus faible que celui des installations de rayons X, et il est complètement automatisable. Ce dispositif peut ainsi être plus aisément introduit dans un atelier de rechapage.

Le dispositif de détection précédemment décrit ne comporte qu'une seule bobine de détection et ainsi assure une pondération des forces électromotrices induites sur le profil transversal des nappes métalliques. Bien entendu, ce dispositif et le procédé de contrôle décrit peuvent être étendus au cas où plusieurs bobines de détection sont utilisées, par exemple pour analyser plus précisément telle ou telle partie des éléments de renfort métalliques.

La méthode et le dispositif de contrôle de l'état des éléments de renfort métalliques de pneumatiques usagés selon l'invention sont particulièrement utiles avant leur rechapage. Cependant, ils peuvent aussi s'appliquer dans d'autres circonstances, telles lors d'un contrôle technique des véhicules.

## Revendications

1. Procédé de contrôle non destructif de l'état d'un élément de renfort métallique en matériau magnétique dans un pneumatique usagé (11), dans lequel :

- on soumet ledit élément de renfort métallique à un champ magnétique pour aimanter ledit élément ;
- on crée un mouvement relatif entre ledit élément de renfort métallique dudit pneumatique (11) et au moins un conducteur (31) d'un dispositif de détection (30) placé en regard dudit élément de renfort métallique de telle sorte que toute variation d'aimantation dudit élément induit dans ledit conducteur (31) une force électromotrice
- on détecte et on enregistre ladite force électromotrice pour l'ensemble dudit élément de renfort métallique :
- on détermine au moins une grandeur caractéristique de l'ensemble des valeurs enregistrées de ladite force électromotrice, et
- on compare ladite grandeur caractéristique avec au moins une grandeur de référence pour déterminer l'état dudit élément métallique de renfort dudit pneumatique usagé.

2. Procédé selon la revendication 1 tel que le mouvement relatif entre ledit élément de renfort métallique dudit pneumatique (11) et ledit conducteur (31) est créé par la mise en rotation du pneumatique (11) autour de son axe.

3. Procédé selon la revendication 2 tel que la vitesse de rotation relative est constante.

4. Procédé selon la revendication 3 tel qu'on utilise la valeur quadratique moyenne P comme grandeur caractéristique desdites forces électromotrices induites.

5. Procédé selon la revendication 4, tel que l'état de l'élément de renfort métallique est classé "mauvais" quand la valeur quadratique moyenne P des forces électromotrices induites est supérieure à un seuil $S_H$.

6. Procédé selon la revendication 5 tel que, pour déterminer la valeur du seuil $S_H$:

- on utilise un lot homogène de pneumatiques usagés ;
- pour chaque pneumatique, on effectue le test de contrôle selon la revendication 4 et on calcule le paramètre P ;
- on met à nu l'élément de renfort métallique de tous les pneumatiques et on détermine ceux qui sont "acceptables" et ceux qui sont "mauvais" ;
- on choisit le seuil $S_H$ tel que tous les pneumatiques ayant une valeur de P supérieure à $S_H$ sont classés "mauvais".

7. Procédé selon la revendication 6 tel que, on utilise comme seconde grandeur caractéristique, une grandeur Nb fonction de la dispersion desdites forces électromotrices induites.

8. Procédé selon la revendication 7 tel que, après avoir échantillonné N valeurs des forces électromotrices induites pendant une rotation relative du pneumatique (11) par rapport au conducteur (31) d'au moins un tour à vitesse de rotation constante, on élève les N valeurs obtenues au carré, on classe lesdites valeurs par valeurs décroissantes et on calcule :

- P, valeur quadratique moyenne des forces électromotrices induites ;
- $N_b$ tel que

$$\sum_{j=1}^{N_b} e_j^2 = a \sum_{j=1}^{N} e_j^2 ;$$

où $e_j$ est la jème valeur des forces électromotrices induites échantillonnées, classées par valeurs décroissantes et "*a*" est un nombre compris entre 0 et 1.

9. Procédé selon la revendication 8 tel que "*a*" est égal à 0,9.

10. Procédé selon l'une des revendications 7 à 9 tel que, l'état de l'élément de renfort métallique est classé "acceptable" quand la valeur quadratique moyenne P des forces électromotrices induites est inférieure à un seuil $S_B$ et ledit état est classé "mauvais" lorsque ladite valeur quadratique moyenne P est supérieure à un seuil $S_H$, et tel que, lorsque ladite valeur quadratique moyenne P est comprise entre les deux seuils précédents, ledit état de l'élément de renfort métallique est classé "mauvais" si la valeur $N_b$ caractéristique de la dispersion des valeurs quadratiques des forces électromotrices induites est supérieure à un seuil $N_c$.

11. Procédé selon la revendication 10 tel que, pour déterminer la valeur des seuils $S_B$, $S_H$ et $N_c$ :

- on utilise un lot homogène de pneumatiques usagés ;
- pour chaque pneumatique, on effectue le test de contrôle selon la revendication 8 et on calcule les paramètres P et $N_b$ ;
- on met à nu l'élément de renfort métallique de tous les pneumatiques et on détermine ceux qui sont "acceptables" et ceux qui sont "mauvais" ;

- on choisit le seuil $S_H$ tel que tous les pneumatiques ayant une valeur de P supérieure à $S_H$ sont classés "mauvais" ;
- on choisit le seuil $S_B$ tel que tous les pneumatiques ayant une valeur de P inférieure à $S_B$ sont classés "acceptables" ;
- on choisit le seuil $N_c$ tel que, pour tous, ou pratiquement tous, les pneumatiques ayant une valeur de P comprise entre les seuils $S_B$ et $S_H$, et classés "mauvais", on ait $N_b > N_c$.

12. Dispositif de contrôle non destructif de l'état d'un élément de renfort métallique d'un pneumatique (11) comportant :

- des moyens pour soumettre ledit élément de renfort métallique à un champ magnétique et l'aimanter ;
- un dispositif de détection (30) des variations d'aimantation dudit élément de renfort métallique comportant au moins un conducteur (31) pour détecter des variations d'aimantation dudit élément de renfort métallique ;
- des moyens pour créer un mouvement relatif entre ledit élément de renfort métallique et ledit dispositif de détection (30) ;
- des moyens d'enregistrement desdites variations détectées par ledit conducteur (31) : et
- des moyens pour déterminer au moins une grandeur caractéristique de l'ensemble des variations enregistrées.

13. Dispositif selon la revendication 12 tel que le mouvement relatif créé entre l'élément de renfort métallique et le dispositif de détection est un mouvement de rotation d'axe confondu avec l'axe de révolution dudit pneumatique (11).

14. Dispositif selon la revendication 13 tel que les moyens d'aimantation (20) ont une position fixe par rapport au dispositif de détection (30) et comportent au moins une première bobine d'aimantation (21) parcourue par un courant électrique continu et au moins une première masse polaire d'adaptation (22), l'ensemble (21, 22) étant placé à proximité de la surface radialement extérieure du pneumatique (11) de telle sorte qu'il y a un entrefer sensiblement constant entre tout point d'un profil transversal dudit élément de renfort métallique adjacent audit dispositif d'aimantation (20) et ladite première masse polaire d'adaptation (22).

15. Dispositif selon la revendication 14 tel que le dispositif de détection (30) comprend au moins une seconde bobine de détection (31) et au moins une seconde masse polaire d'adaptation (32) telles que les variations d'aimantation de l'élément de renfort métallique induisent dans la seconde bobine de détection (31) des forces électromotrices, l'ensemble du dispositif de détection (30) étant décalé circulairement d'un angle $\alpha$ par rapport au dispositif d'aimantation (20) relativement à l'axe de révolution du pneumatique (11).

16. Dispositif selon la revendication 15 tel que la masse polaire d'adaptation (31) du dispositif de détection (30) a une forme de C, les deux extrémités (35, 36) des branches (33, 34) du C ayant une géométrie adaptée au profil transversal de l'élément de renfort métallique et étant disposées parallèlement entre elles à proximité de la surface radialement extérieure du pneumatique (11) de telle sorte que l'entrefer est sensiblement constant entre tout point des profils transversaux dudit élément de renfort métallique adjacents auxdites extrémités (35, 36) des branches (33, 34) du C, et lesdites extrémités (35, 36).

17. Dispositif selon la revendication 16 tel que l'écartement h entre les deux extrémités (35, 36) du C est de l'ordre de 3 mm.

18. Dispositif selon l'une des revendications 12 à 17 tel que le dispositif de détection (30) comprend une seule bobine de détection (31).

**Patentansprüche**

1. Nichtzerstörendes Verfahren zur Überprüfung des Zustands eines metallischen Verstärkungselements aus magnetischem Material in einem gebrauchten Reifen (11), worin:

- man das genannte, metallische Verstärkungselement einem Magnetfeld aussetzt, um das genannte Element zu magnetisieren;
- man eine Relativbewegung zwischen dem genannten, metallischen Verstärkungselement des genannten Reifens (11) und mindestens einem Leiter (31) einer Erfassungsvorrichtung (30) erzeugt, die dem genannten, metallischen Verstärkungselement gegenüberliegend angeordnet wird, so daß auf diese Weise jede Veränderung der Magnetisierung des genannten Elements im genannten Leiter (31) eine elektromotorische Kraft induziert;
- man die genannte. elektromotorische Kraft für die Baugruppe des genannten metallischen Verstärkungselements erfaßt und man sie aufzeichnet;
- man mindestens eine Größe bestimmt, die charakteristisch für die Gruppe von aufgezeichneten Werten der genannten, elektromotorischen Kraft ist; und

- man die genannte, charakteristische Größe mit mindestens einer Bezugsgröße vergleicht, um den Zustand des genannten, metallischen Verstärkungselements des genannten, gebrauchten Reifens zu bestimmen.

2. Verfahren nach Anspruch 1, so daß die Relativbewegung zwischen dem metallischen Verstärkungselements des genannten Reifens (11) und dem Leiter (31) dadurch erzeugt wird, daß man den Reifen (11) um seine Achse in Drehung versetzt.

3. Verfahren nach Anspruch 2, so daß die relative Drehgeschwindigkeit konstant ist.

4. Verfahren nach Anspruch 3, so daß man den mittleren, quadratischen Wert P als charakteristische Größe der genannten induzierten, elektromotorischen Kräfte verwendet.

5. Verfahren nach Anspruch 4, so daß der Zustand des metallischen Verstärkungselements als "schlecht" klassifiziert wird, wenn der mittlere, quadratische Wert P der induzierten, elektromotorischen Kräfte größer ist als ein Schwellenwert $S_H$.

6. Verfahren nach Anspruch 5, so daß zur Bestimmung des Schwellenwertes $S_H$:

- man eine homogene Charge gebrauchter Reifen verwendet;
- man für jeden Reifen den Überprüfungstest nach Anspruch 4 bewirkt und man den Parameter P berechnet;
- man gesondert das metallische Verstärkungselement aller Reifen mißt und diejenigen bestimmt, die "annehmbar" sind, sowie diejenigen, die "schlecht" sind; und
- man den Schwellenwert $S_H$ so wählt, daß alle Reifen mit einem Wert P von mehr als $S_H$ als "schlecht" eingestuft werden.

7. Verfahren nach Anspruch 6, so daß man als zweite, charakteristische Größe eine Größe $N_b$ verwendet, die abhängig von der Streuung der genannten, induzierten, elektromotorischen Kräfte ist.

8. Verfahren nach Anspruch 7, so daß man, nachdem man N Werte der induzierten, elektromotorischen Kräfte als Proben während einer Relativdrehung des Reifens (11) bezüglich des Leiters (31) um mindestens eine Umdrehung mit konstanter Drehgeschwindigkeit entnommen hat, man N Werte aufgreift, die im Quadrat erhalten wurden, man die genannten Werte in abnehmende Werte einordnet und man berechnet:

- P, den quadratischen Mittelwert der induzierten, elektromotorischen Kräfte; und
- $N_b$ so, daß

$$\sum_{j=1}^{N_b} e_j^2 = a \sum_{j=1}^{N} e_j^2 \ ,$$

wobei $e_j$ derselbe Wert der induzierten, zur Probe entnommenen Kräfte ist, die in abnehmenden Werten klassifiziert sind und "a" eine Zahl ist, die zwischen 0 und 1 liegt.

9. Verfahren nach Anspruch 8, so daß "a" 0,9 beträgt.

10. Verfahren nach einem der Ansprüche 7 bis 9, so daß der Zustand des metallischen Verstärkungselements als "annehmbar" eingestuft wird, wenn der quadratische Mittelwert P der induzierten, elektromotorischen Kräfte kleiner ist als ein Schwellenwert $S_B$, und der genannte Zustand als "schlecht" eingestuft wird, wenn der genannte, quadratische Mittelwert P größer ist als ein Schwellenwert $S_H$, und so daß, wenn der genannte, quatratische Mittelwert P zwischen den beiden, vorangehenden Schwellenwerten liegt, der genannte Zustand des metallischen Verstärkungselements als "schlecht" eingestuft wird, wenn der charakteristische Wert $N_b$ der Streuung der quadratischen Werte der induzierten elektromotorischen Kräfte größer ist als ein Schwellenwert $N_c$.

11. Verfahren nach Anspruch 10, so daß zur Bestimmung der Schwellenwerte $S_B$, $S_H$ und $N_c$:

- man eine homogene Charge gebrauchter Reifen verwendet;
- man für jeden Reifen den Überprüfungstest nach Anspruch 8 durchführt und die Parameter P und $N_b$ berechnet;
- man das metallische Verstärkungselement aller Reifen freilegt und man diejenigen bestimmt, die "annehmbar" sind, und diejenigen, die "schlecht" sind;
- man den Schwellenwert $S_H$ bestimmt, so daß alle Reifen, die einen Wert von P haben, der größer ist als $S_H$, als "schlecht eingestuft werden ;
- man den Wert $S_B$ bestimmt, so daß alle Reifen, die einen Wert von P haben, der niedriger ist als $S_B$, als "annehmbar" eingestuft werden; und
- man einen Schwellenwert $N_c$ wählt, so daß man für alle oder praktisch alle die Reifen, die einen Wert von P haben, der zwischen $S_B$ und $S_H$ liegt, und die als "schlecht" eingestuft werden, $N_b > N_c$ hat.

**12.** Vorrichtung zum Überprüfen des Zustandes eines metallischen Verstärkungselements eines Reifens (11), mit:

- Mitteln, um das genannte, metallische Verstärkungselement einem magnetischen Feld zu unterwerfen und zu magnetisieren;
- einer Vorrichtung (30) zum Erfassen der Veränderungen der Magnetisierung des genannten, metallischen Verstärkungselements, die mindestens einen Leiter (31) zum Erfassen der Veränderung der Magnetisierung des genannten, metallischen Verstärkungselements aufweist;
- Mitteln, um eine Relativbewegung zwischen dem genannten, metallischen Verstärkungselement und der genannten Erfassungsvorrichtung (30) zu erzeugen;
- Mitteln zur Registrierung der genannten, durch den genannten Leiter (31) erfaßten Veränderungen; und
- Mitteln zum Bestimmen mindestens einer charakteristischen Größe der Gruppe der registrierten Veränderungen.

**13.** Vorrichtung nach Anspruch 12, so daß die Relativbewegung, die zwischen dem metallischen Verstärkungselement und der Erfassungsvorrichtung erzeugt wird, eine Drehbewegung mit einer Achse ist, die mit der Drehachse des genannten Reifens (11) zusammenfällt.

**14.** Vorrichtung nach Anspruch 13, so daß die Magnetisierungsmittel (20) bezüglich der Erfassungsvorrichtung (30) eine feste Lage haben und mindestens eine erste Magentisierungsspule (21) aufweisen, die von einem kontinuierlichen elektrischen Strom durchflossen wird, sowie mindestens eine erste, polare Anpassungsmasse (22), wobei die Baugruppe (21, 22) in der Nähe der radial äußeren Oberfläche des Reifens (11) derart angeordnet ist, daß es einen im wesentlichen konstanten Luftspalt zwischen jedem Punkt eines querverlaufenden Profils des genannten, metallischen Verstärkungselements in Nachbarschaft zur genannten Magnetisierungsvorrichtung (20) und der genannten, ersten, polaren Anpassungsmasse (22) gibt.

**15.** Vorrichtung nach Anspruch 14, so daß die Erfassungsvorrichtung (30) mindestens eine zweite Erfassungsspule (31) und mindestens eine zweite, polare Anpassungsmasse (32) aufweist, die so beschaffen sind, daß die Veränderungen der Magnetisierung des metallischen Verstärkungselements in der zweiten Erfassungsspule (31) elektromotorische Kräfte induzieren, wobei die Baugruppe der Erfassungsspule (30) in Kreisrichtung um einen Winkel α bezüglich der Magnetisierungsvorrichtung (20) relativ zur Drehachse des Reifens (11) versetzt ist.

**16.** Vorrichtung nach Anspruch 15, so daß die polare Anpassungsmasse (31) der Erfassungsvorrichtung (30) C-förmig ist, wobei die beiden Enden (35, 36) der Zweige (33, 34) des C eine Geometrie haben, die an das Querprofil des metallischen Verstärkungselements angepaßt ist, und parallel zueinander in der Nähe der radial äußeren Oberfläche des Reifens (11) derart angeordnet sind, daß der Luftspalt zwischen allen·quergelegenen Punkten des Profils des genannten, metallischen Verstärkungselements, die den genannten Enden (35, 36) der Zweige (33, 34) des C benachbart sind, und den genannten Enden (35, 36) im wesentlichen konstant ist.

**17.** Vorrichtung nach Anspruch 16, so daß der Abstand h zwischen den beiden Enden (35, 36) des C in der Größenordnung von 3 mm liegt.

**18.** Vorrichtung nach einem der Ansprüche 12 bis 17, so daß die Erfassungsvorrichtung (30) eine einzige Erfassungsspule (31) aufweist.

**Claims**

**1.** A process for the non-destructive checking of the condition of a metallic reinforcement element of magnetic material in a worn tyre (11), in which:

- said metallic reinforcement element is subjected to a magnetic field in order to magnetise said element;
- a relative movement is created between said metallic reinforcement element of said tyre (11) and at least one conductor (31) of a detection device (30) placed opposite said metallic reinforcement element in such a manner that any variation in magnetisation of said element induces an electromotive force in said conductor (31);
- said electromotive force is detected and recorded for all of said metallic reinforcement element;
- at least one characteristic magnitude of all the recorded values of said electromotive force is determined, and
- said characteristic magnitude is compared with at least one reference magnitude to determine the condition of said metallic reinforcement element of said worn tyre.

**2.** A process according to Claim 1, wherein the relative movement between said metallic reinforcement element of said tyre (11) and said conductor (31) is created by the rotating of the tyre (11) around its axis.

3. A process according to Claim 2, wherein the relative speed of rotation is constant.

4. A process according to Claim 3, wherein the mean-square value P is used as characteristic magnitude of said induced electromotive forces.

5. A process according to Claim 4, wherein the condition of the metallic reinforcement element is classified as "poor" when the mean-square value P of the induced electromotive forces is greater than a threshold $S_H$.

6. A process according to Claim 5, wherein, in order to determine the value of the threshold $S_H$:

   - a homogeneous batch of worn tyres is used;
   - for each tyre, the checking test according to Claim 4 is carried out and the parameter P calculated;
   - the metallic reinforcement element of all the tyres is bared and those which are "acceptable" and those which are "poor" are determined;
   - the threshold $S_H$ is so selected that all the tyres having a value of P greater than $S_H$ are classified as "poor".

7. A process according to Claim 6, wherein, as second characteristic magnitude, a magnitude $N_b$ which is a function of the dispersion of said induced electromotive forces is used.

8. A process according to Claim 7, wherein, after having sampled N values of the electromotive forces induced during a relative rotation of the tyre (11) with respect to the conductor (31) by at least one revolution at constant speed of rotation, the N values obtained are squared, said values are classified in decreasing value and there is calculated:

   - P, mean-square value of the induced electromotive forces;

   - $N_b$ such that

$$\sum_{j=1}^{N_b} e_j^2 = a \sum_{j=1}^{N} e_j^2,$$

   in which $e_j$ is the j-th value of the sampled induced electromotive forces, classified in decreasing value, and "a" is a number between 0 and 1.

9. A process according to Claim 8, such that "a" is equal to 0.9.

10. A process according to one of Claims 7 to 9, wherein the condition of the metallic reinforcement element is classified as "acceptable" when the mean-square value P of the induced electromotive forces is less than a threshold $S_B$ and said condition is classified as "poor" when said mean-square value P is greater than a threshold $S_H$, and wherein, when said mean-square value P lies between the two preceding thresholds, said condition of the metallic reinforcement element is classified as "poor" if the value $N_b$ characteristic of the dispersion of the square values of the induced electromotive forces is greater than a threshold $N_c$.

11. A process according to Claim 10, wherein, in order to determine the values of the thresholds $S_B$, $S_H$ and $N_c$:

    - a homogeneous batch of worn tyres is used;
    - for each tyre the checking test in accordance with Claim 8 is carried out and the parameters P and $N_b$ are calculated;
    - the metallic reinforcement elements of all the tyres is bared and those which are "acceptable" and those which are "poor" are determined;
    - the threshold $S_H$ is so selected that all the tyres having a value of P greater than $S_H$ are classified as "poor";
    - the threshold $S_B$ is so selected that all the tyres having a value of P less than $S_B$ are classified as "acceptable";
    - the threshold $N_c$ is so selected that for all or practically all the tyres having a value of P of between the thresholds $S_B$ and $S_H$ and classified as "poor", $N_b > N_c$.

12. A non-destructive device for checking the condition of a metallic reinforcement element of a tyre (11), comprising:

    - means for subjecting said metallic reinforcement element to a magnetic field and magnetising it;

    - a device (30) for detecting variations in magnetisation of said metallic reinforcement element comprising at least one conductor (31) for detecting variations in magnetisation of said metallic reinforcement element;

    - means for creating a relative movement between said metallic reinforcement element and said detection device (30);

- means for recording said variations detected by said conductor (31); and

- means for determining at least one characteristic magnitude of all the recorded variations.

13. A device according to Claim 12, wherein the relative movement created between the metallic reinforcement element and the detection device is a movement of rotation around an axis identical with the axis of revolution of said tyre (11).

14. A device according to Claim 13, wherein the magnetisation means (20) have a fixed position with respect to the detection device (30) and comprise at least one first magnetisation coil (21) traversed by a direct electric current and at least one first pole piece (22), the assembly (21, 22) being placed in the vicinity of the radially outer surface of the tyre (11) in such a manner that there is a substantially constant gap between any point of a transverse profile of said metallic reinforcement element adjacent to said magnetisation device (20) and said first pole piece (22).

15. A device according to Claim 14, wherein the detection device (30) comprises at least one second detection coil (31) and at least one second pole piece (32) such that the variations in magnetisation of the metallic reinforcement element induce electromotive forces in the second detection coil (31), the entire detection device (30) being offset circularly by an angle $\alpha$ with respect to the magnetisation device (20) relative to the axis of revolution of the tyre (11).

16. A device according to Claim 15, wherein the pole piece (31) of the detection device (30) has the shape of a C, the two ends (35, 36) of the branches (33, 34) of the C having a geometry adapted to the transverse profile of the metallic reinforcement element and being arranged parallel to each other in the vicinity of the radially outer surface of the tyre (11), in such a manner that the gap is substantially constant between any point of the transverse profiles of said metallic reinforcement element which are adjacent to said ends (35, 36) of the branches (33, 34) of the C and said ends (35, 36).

17. A device according to Claim 16, wherein the distance h between the two ends (35, 36) of the C is of the order of 3 mm.

18. A device according to one of Claims 12 to 17, wherein the detection device (30) comprises a single detection coil (31).

FIG.1

FIG.2

FIG. 3

FIG. 4

# Etat de la technique

```
┌─────────────────────────────┐
│          STOCKAGE           │
└─────────────────────────────┘
                │
┌─────────────────────────────┐
│      DECHAPAGE/CARDAGE       │
└─────────────────────────────┘
                │
                ▼
              CONTROLE  ──── MAUVAIS ──── REJET
                │
                ▼ ACCEPTABLE
┌─────────────────────────────┐
│          HABILLAGE          │
└─────────────────────────────┘
                │
┌─────────────────────────────┐
│           CUISSON           │
└─────────────────────────────┘
                │
      SORTIE DES PNEUMATIQUES
```

FIG. 5

```
┌─────────────────────────────┐
│          STOCKAGE           │
└─────────────────────────────┘
              │
              ▼
           ╱╲
          ╱  ╲        MAUVAIS
    CONTROLE  ╲ ──────────────── REJET
   NON DESTRUCTIF
          ╲  ╱
           ╲╱
            │
            ▼ ACCEPTABLE
┌─────────────────────────────┐
│     DECHAPAGE/CARDAGE       │
└─────────────────────────────┘
              │
              ▼
           ╱╲
          ╱  ╲        MAUVAIS
   CONTROLE   ╲ ──────────────── REJET
          ╲  ╱
           ╲╱
            │
            ▼ ACCEPTABLE
┌─────────────────────────────┐
│          HABILLAGE          │
└─────────────────────────────┘
              │
┌─────────────────────────────┐
│          CUISSON            │
└─────────────────────────────┘
              │
              │
    SORTIE DES PNEUMATIQUES
```

FIG. 6